# EUROPÄISCHE PATENTANMELDUNG

(11) **EP 0 901 216 A2**
(43) Veröffentlichungstag der Anmeldung: **10.03.1999**
(21) Anmeldenummer: 98202844.1
(22) Anmeldetag: 27.08.1998
(51) Int. Cl.: H02M 5/257

(54) **Verfahren zur schaltstossarmen Leistungssteuerung elektrischer Lasten sowie elektrisches Heizgerät**

(30) Priorität: 05.09.1997 DE 19738890
(71) Anmelder: Philips Patentverwaltung GmbH, 22335 Hamburg (DE); Koninklijke Philips Electronics N.V., 5621 BA Eindhoven (NL)
(72) Erfinder: Kersten, Reinhard, Dr., Röntgenstrasse 24, 22335 Hamburg (DE); Griesshammer, Albrecht, Röntgenstrasse 24, 22335 Hamburg (DE)
(74) Vertreter: von Laue, Hanns-Ulrich, Dipl.-Ing.

(57) **Zusammenfassung**

Die Erfindung bezieht sich auf ein Verfahren zur schaltstoßarmen Leistungssteuerung elektrischer Lasten, insbesondere temperaturabhängiger Lasten, welche jeweils in wenigstens zwei im wesentlichen gleiche Unterlasten elektrisch aufgeteilt sind, wobei die Unterlasten jeder Last zur Leistungsaufnahme an ein Wechselstromnetz schaltbar sind.
Zur Leistungssteuerung in einem unteren Leistungsbereich sind wechselweise
- Abschaltphasen, in denen für wenigstens drei Wechselstrom-Halbwellen keine der Unterlasten auf Leistungsaufnahme geschaltet ist und
- Aufheizphasen, in denen mittels zeitlicher Kombination wenigstens eines ersten und eines zweiten Grundzyklus von jeweils drei Wechselstrom-Halbwellen jeweils eine der Unterlasten auf Leistungsaufnahme geschaltet wird,
vorgesehen,
wobei während einer Halbwelle des ersten Grundzyklus die erste Unterlast auf Leistungsaufnahme geschaltet wird und während einer Halbwelle des zweiten Grundzyklus die zweite Unterlast auf Leistungsaufnahme geschaltet wird und wobei während der anderen beiden Halbwellen des ersten und des zweiten Grundzyklus die Leistungsaufnahme abgeschaltet wird.
Ferner bezieht sich die Erfindung auf ein elektrisches Heizgerät, in dem dieses Verfahren implementiert ist.

## Beschreibung

Die Erfindung bezieht sich auf ein Verfahren zur schaltstoßarmen Leistungssteuerung elektrischer Lasten, insbesondere temperaturabhängiger Lasten, welche jeweils in wenigstens zwei im wesentlichen gleiche Unterlasten elektrisch aufgeteilt sind, wobei die Unterlasten jeder Last zur Leistungsaufnahme an ein Wechselstromnetz schaltbar sind, sowie auf ein elektrisches Heizgerät mit wenigstens einer elektrischen Heizlast, die zwei Unterlasten, insbesondere zwei Halogenlampen, aufweist.

Ein derartiges Verfahren ist aus der EP 303 314 B1 bekannt. Bei diesem bekannten Verfahren sind die Unterlasten jeder Last wahlweise in wenigstens drei Haupt-Leistungsstufen in Serienschaltung, wechselweise einzeln oder in Parallelschaltung an ein Wechselstromnetz schaltbar. Dieses wird mittels dreier Triac-Steuerelemente realisiert, die in einer Brückenschaltung angeordnet sind und mittels einer Steuereinheit ansteuerbar sind.

Bei derartigen Verfahren muß darauf geachtet werden, daß die Netzrückwirkung bei der Leistungssteuerung der elektrischen Lasten einen zulässigen Höchstwert nicht überschreitet. Die maximal zulässigen Netzrückwirkungen sind in der IEC-1000-3-3: Electro Magnetic Compatibility (EMC), Part 3, Limits-Section 3: Limitation of voltage fluctuations and flicker in low-voltage supply systems for equipment with rated currents <16A, festgelegt.

In dieser Norm werden einerseits die Anlaufströme begrenzt, indem die maximal erlaubten relativen Spannungsschwankungen der Spannungsversorgung während einer Netzhalbwelle festgelegt sind. Andererseits ist die maximal zulässige Neztrückwirkung festgelegt, die beim periodischen Ein- und Ausschalten der Lasten entsteht. Die durch das periodische Ein- und Ausschalten der Lasten entstehende Netzrückwirkung wird als Flickern bezeichnet. Dabei ist die Norm bei temperaturabhängigen Lasten (beispielsweise Halogenlampen) für kleine Leistungen schwierig einzuhalten, wenn sich der Leistungssprung zwischen Aus- und Einschaltung infolge Abkühlung der Lasten vergrößert.

Bei dem in der EP 303 314 B1 beschriebenen Verfahren werden für kleinste Leistungen die beiden Unterlasten grundsätzlich in Serie geschaltet. Zur Leistungssteuerung werden drei Schaltelemente verwendet. Werden die Schaltelemente mittels Halbleiterbauelementen, wie z.B. Triacs, realisiert, dann haben zwei der Bauelemente keinen gemeinsamen Fußpunkt und müssen aufwendig über Optokoppler oder Zündtrafos angesteuert werden. Außerdem besteht die Gefahr eines Kurzschtusses infolge Fehlzündens der Schaltelemente selbst. Verwendet man als Schaltelemente für die Serien/Parallelumschaltung mechanische Relais, so hat dies den Nachteil, daß in einem mittleren Leistungsbereich Umschaltgeräusche entstehen. Außerdem benötigt man ein zusätzliches Bauelement (Relais oder Triac).

Es ist Aufgabe der Erfindung, ein anderes Verfahren zur schaltstoßarmen Leistungssteuetung elektrischer Lasten aufzuzeigen, mittels dessen bei gegebener Nennleistung der Last auch niedrige Leistungen insbesondere unterhalb von 25% der Nennleistung unter Einhaltung der Norm IEC-1000-3-3 einstellbar sind. Außerdem ist es Aufgabe der Erfindung, ein elektrisches Heizgerät anzugeben, das schaltstoßarm arbeitet und die Einhaltung der EMC-Normen ermöglicht.

Die Aufgabe betreffend das Verfahren ist erfindungsgemäß dadurch gelöst, daß zur Leistungssteuerung in einem unteren Leistungsbereich wechselweise
- Abschaltphasen, in denen für wenigstens drei Wechselstrom-Halbwellen keine der Unterlasten auf Leistungsaufnahme geschaltet ist und
- Aufheizphasen, in denen mittels zeitlicher Kombination wenigstens eines ersten und eines zweiten Grundzyklus von jeweils drei WechselstromHalbwellen jeweils eine der Unterlasten auf Leistungsaufnahine geschaltet wird,
vorgesehen sind,
wobei während einer Halbwelle des ersten Grundzyklus die erste Unterlast auf Leistungsaufnahme geschaltet wird und während einer Halbwelle des zweiten Grundzyklus die zweite Unterlast auf Leistungsaufnahme geschaltet wird und wobei während der anderen beiden Halbwellen des ersten und des zweiten Grundzyklus die Leistungsaufnahme abgeschaltet wird.

Bei diesem Verfahren ist keine Serien/Parallelumschaltung erforderlich. In den Abschaltphasen ist für wenigstens drei Wechselstrom-Halbwellen keine der beiden Unterlasten auf Leistungsaufnahme geschaltet. Als unterer Leistungsbereich ist insbesondere der Leistungsbereich unterhalb von 25% der Nennleistung vorgesehen.

Durch das Tastverhältnis, welches durch das Verhältnis der zeitlichen Länge der Aufheizphase zu der zeitlichen Länge von Aufheiz- und Abschaltphase definiert ist, kann die Leistungsaufnahme nahezu stufenlos eingestellt werden. In den Aufheizphasen werden die erste und die zweite Unterlast jeweils abwechselnd, aber nicht gleichzeitig auf Leistungsaufnahme geschaltet. Hierfür sind der erste und der zweite Grundzyklus vorgesehen, welche in geeigneter Weise zeitlich kombiniert werden. Der erste und der zweite Grundzyklus bestehen jeweils aus drei Wechselstrom-Halbwellen, wobei im ersten Grundzyklus während einer der drei Halbwellen die erste Unterlast auf Leistungsaufnahme geschaltet wird und während der anderen beiden Halbwellen die Leistungsaufnahme abgeschaltet ist. Im zweiten Grundzyklus ist während einer der drei Halbwellen die zweite Unterlast auf Leistungsaufnahme geschaltet, und während der übrigen beiden Halbwellen ist die Leistungsaufnahme abgeschaltet.

Vorzugsweise werden innerhalb der einzelnen Aufheizphasen immer die gleichen der drei Halbwellen des ersten und des zweiten Grundzyklus eingeschaltet, d.h. entweder jeweils die erste der drei Halbwellen des ersten und des zweiten Grundzyklus oder jeweils die zweite der drei Halbwellen des ersten und des zweiten Grundzyklus oder jeweils die dritte der drei Halbwellen des ersten und des zweiten Grundzyklus. Dadurch erfolgt das Einschalten der ersten bzw. der zweiten Unterlast immer im zeitlichen Abstand von jeweils drei Wechselstrom-Halbwellen. Dies ist für eine geringe Netzrückwirkung günstig. In den später aufgeführten Beispielen wird stellvertretend immer die erste der drei Halbwellen geschaltet.

Mit einem derartigen Verfahren lassen sich auch kleinste Leistungen (z.B. unter 12% einer Nennleistung von I700W) unter Einhaltung der Norm IEC-1000-3-3 realisieren.

Eine vorteilhafte Ausgestaltung der Erfindung ist dadurch gekennzeichnet, daß die Aufheizphasen jeweils eine erste Grundzyklusphase, in der der erste Grundzyklus seriell wiederholt wird und eine zweite Grundzyklusphase aufweisen, in der der zweite Grundzyklus seriell wiederholt wird.

Bei dieser Ausgestaltung des Verfahrens wird beispielsweise zunächst die erste Grundzyklusphase mehrfach wiederholt, d.h. während jeder dritten Wechselstrom-Halbwelle wird die erste Unterlast auf Leistungsaufnahme geschaltet. Danach wird die zweite Grundzyklusphase mehrfach periodisch wiederholt, d.h. die zweite Unterlast wird während jeder dritten Wechselstrom-Halbwelle auf Leistungsaufnahme geschaltet. Danach folgt eine Abschaltphase, in der keine der Unterlasten auf Leistungsaufnahme geschaltet ist. Nachfolgend folgt dann wieder eine Aufheizphase, welche sowohl mit der ersten Grundzyklusphase als auch mit der zweiten Grundzyklusphase beginnen kann. Diese Ausgestaltung des Verfahrens hat insbesondere bei Halogenlampen den Vorteil, daß das Licht der ersten bzw. der zweiten Halogenlampe während der ersten bzw. der zweiten Grundzyklusphase für das menschliche Auge als kontinuierliche Lichtquelle erscheint. Ein Flackern der während der jeweiligen Grundzyklusphase zur Aufheizung vorgesehenen Halogenlampe ist für das menschliche Auge nicht wahrnehmbar. Das von der ersten bzw. der zweiten Halogenlampe erzeugte Licht schaukelt vielmehr beim Übergang zwischen den Grundzyklusphasen wie eine Wanderwelle von der ersten zur zweiten Halogenlampe und von der zweiten zur ersten Halogenlampe.

Vorteilhaft wird diese Ausgestaltung dadurch weitergebildet, daß die erste und die zweite Grundzyklusphase innerhalb einer Aufheizphase jeweils unterschiedlich lang sind, daß in den zeitlich aufeinanderfolgenden Aufheizphasen wechselweise die kürzere Zyklusphase von der ersten Grundzyklusphase und die längere Zyklusphase von der zweiten Grundzyklusphase oder die kürzere Zyklusphase von der zweiten Grundzyklusphase und die längere Zyklusphase von der ersten Grundzyklusphase gebildet werden, wobei die kürzere Zyklusphase jeweils am Anfang der Aufheizphase vorgesehen ist.

Nach der Abschaltphase folgt immer zunächst die kürzere Zyklusphase, in der beispielsweise die erste Last für kurze Zeit auf Leistungsaufnahme geschaltet wird. Nachfolgend wird der andere Grundzyklus, d.h. in diesem Beispiel der zweite Grundzyklus während der längeren Zyklusphase eingeschaltet, wodurch die zweite Unterlast auf Leistungsaufnahme geschaltet wird. Im Anschluß an diese längere Zyklusphase des zweiten Grundzyklus folgt die Abschaltphase, und nach der Abschaltphase folgt wieder die kürzere Zyklusphase der nachfolgenden Aufheizphase, die in diesem Beispiel dann von der zweiten Grundzyklusphase gebildet wird. Auf die kürzere Zyklusphase des zweiten Grundzyklus folgt dann die längere Zyklusphase mit dem ersten Grundzyklus.

Die einzelnen Aufheizphasen sind also so aufgeteilt, daß zunächst die kürzere Zyklusphase und dann die längere Zyklusphase auftritt, wobei die kürzere und die längere Zyklusphase jeweils alternierend von der ersten bzw. der zweiten Grundzyklusphase gebildet werden.

Mit diesem Wechselprinzip im Zusammenspiel mit den unterschiedlich langen Zyklusphasen innerhalb einer Aufheizphase lassen sich bei temperaturabhängigen Lasten, wie beispielsweise Halogenlampen, auch bei kleinen Leistungen, d.h. langen Abschaltphasen, sehr geringe Netzrückwirkungen realisieren. Mit diesem Wechselprinzip wird erreicht, daß nach der Abschaltphase immer diejenige Unterlast eingeschaltet wird, die vor der Abschaltphase zuletzt eingeschaltet war, und zwar jeweils nur für die Zeit der kürzeren Zyklusphase. Somit wird bei Halogenlampen, welche Kaltleiter sind, erreicht, daß immer die wärmste und damit kleinere Unterlast nach einer Abschaltphase auf Leistungsaufnahme geschaltet wird. Der darauffolgende Schaltvorgang auf die andere kältere und damit größere Unterlast stellt bezüglich der Netzrückwirkung eine viel Kleinere Störung dar als der erste Schaltvorgang nach einer längeren Abschaltphase, da dann nur die Änderung der Gesamtlast wirksam wird.

Besonders vorteilhaft hat sich bei dieser Ausgestaltung erwiesen, daß die kürzere Zyklusphase jeweils sechs Wechselstrom-Halbwellen aufweist. Somit wird nach der Abschaltphase der erste bzw. der zweite Grundzyklus nur jeweils zweimal wiederholt, worauf sich dann die längere Zyklusphase mit dem jeweils anderen Grundzyklus anschließt. Wird beispielsweise nach der Abschaltphase der erste Grundzyklus zweimal wiederholt, dann schließt sich daran eine mehrfache Wiederholung des zweiten Grundzyklus an. Hierauf folgt die Abschaltphase, und in der nachfolgenden Aufheizphase wird zunächst als kürzere Zyklusphase der zweite Grundzyklus zweimal wiederholt, und danach erfolgt als längere Zyklusphase ein mehrfaches Wiederholen des ersten Grundzyklus. Mit einem derartigen Verfahren lassen sich auch kleinste Leistungen (z.B. 5% einer Nennlast von 1700W) unter Einhaltung der Norm IEC-1000-3-3 erreichen.

Eine weitere vorteilhafte Ausgestaltung der Erfindung ist dadurch gekennzeichnet, daß in den Aufheizphasen der erste und der zweite Grundzyklus wechselweise wiederholt werden.

Während der Aufheizphasen wird also jeweils einmal der erste Grundzyklus geschaltet, dann folgt einmal der zweite Grundzyklus, dann folgt wieder einmal der erste Grundzyklus, nachfolgend wieder einmal der zweite Grundzyklus u.s.w. Infolge des ständigen Hin- und Herschaltens zwischen der ersten und der zweiten Unterlast sind derartige Aufheizphasen bei Verwendung von Halogenlampen als Heizlasten teilweise visuell unangenehm. Für das menschliche Auge "flackern" diese Muster. Diese Muster haben jedoch den Vorteil, daß sie in einem Leistungsbereich von beispielsweise 12% bis 25% einer Nennleistung von 1700W geringe Netzrückwirkungen aufweisen.

Bei all den vorstehend beschriebenen Verfahren ist es vorteilhaft, daß nach einer Abschaltphase immer diejenige Unterlast zuerst auf Leistungsaufnahme geschaltet wird, die vor der Abschaltphase zuletzt auf Leistungsaufnahme geschaltet war.

Bei Kaltleitern als Heizlasten, wie beispielsweise Halogenlampen, wird mit diesem Verfahren erreicht, daß immer der wärmste und damit größte Widerstand nach einer Abschaltphase zuerst eingeschaltet wird. Dadurch ist die Netzrückwirkung beim Übergang zwischen der Abschaltphase und der Aufheizphase geringer, als wenn nach der Abschaltphase die kältere Unterlast und damit die größere Unterlast mit dem kleineren Widerstand als erste eingeschaltet würde. Der nachfolgende Schaltvorgang innerhalb der Aufheizphase von der einen zu der anderen Unterlast stellt bezüglich der Netzrückwirkung eine viel kleinere Störung dar als der erste Schaltvorgang nach der Abschaltphase.

Dieses Wechselprinzip hat insbesondere in einem Leistungsbereich zwischen ca. 12% bis 25% einer Nennleistung von ca. 1700W deutliche Vorteile bezüglich der Netzrückwirkung.

Bei der Ausgestaltung des Verfahrens gemäß Anspruch 7 erfolgt die Leistungssteuerung in der Aufheizphase dadurch, daß zusätzlich zu dem ersten und dem zweiten Grundzyklus ein dritter Grundzyklus verwendet wird, in dem während einer der drei Halbwellen die erste Unterlast, während einer weiteren Halbwelle die zweite Unterlast und während der anderen Halbwelle keine der beiden Unterlasten auf Leistungsaufnahme geschaltet ist.

Dieser dritte Grundzyklus kann unterschiedlich eingesetzt werden:

Für kleine und mittlere Leistungen (beispielsweise 12% bis 44% einer Nennleistung von 1700W) kann die eben beschriebene Ausgestaltung wie folgt kombiniert werden: Nach dem ersten und zweiten Grundzyklus folgt der dritte Grundzyklus mit wenigstens drei Halbwellen. Danach folgt entweder direkt die Abschaltphase mit mindestens drei Halbwellen oder erst nach Zwischenschaltung eines ersten und zweiten Grundzyklus. Dieses Verfahren hat zwar eine größere Netzrückwirkung bei kleinen Leistungen als die Unteransprüche 2 bis 6. Dies hat aber den Vorteil, daß für das menschliche Auge beide Lampen gleichzeitig parallel aufleuchten, was zu einem ruhigeren optischen Eindruck führt. Es ist auch vorteilhaft, wenn (beispielsweise aus Sicherheitsgründen) ein höherer Gesamtlichteindruck gefordert wird.

Durch geeignete Kombination aller drei Grundzyklen mit einer Abschaltphase läßt sich der ganze Leistungsbereich von Kleinsten bis mittleren Leistungen fast stufenlos einstellen (z.B. 10% bis 44% der Nennleistung bei 1700W). Dabei gibt es eine lange Phase des dritten Grundzyklus und eine lange Abschaltphase mit kurzen Übergängen, vorzugsweise bestehend aus der direkten Hintereinanderschaltung eines ersten und zweiten Grundzyklus.

Für mittlere Leistungen (beispielsweise 25% bis 44% einer Nennleistung von 1700W) kann auf die Abschaltphase von mindestens drei Halbwellen ganz verzichtet werden, weil sich dieser Leistungsbereich allein durch die Kombination aller drei Grundzyklen erschließt. Dabei schließen sich an einen ersten Grundzyklus über mindestens drei Halbwellen ein zweiter Grundzyklus von mindestens drei Halbwellen und ein dritter Grundzyklus von mindestens drei Halbwellen an, in dem während einer der drei Halbwellen die erste Unterlast, während einer weiteren Halbwelle die zweite Unterlast und während der anderen Halbwelle keine der beiden Unterlasten auf Leistungsaufnahme geschaltet wird. Dem Vorteil einer geringeren Netzrückwirkung steht der Nachteil des optischen Gesamteindrucks gegenüber. In den ersten beiden Teilphasen wandert das Licht von einer Halogenlampe zur anderen, was bei der ersten Variante vermieden wurde.

Wenn nur der erste und der zweite Grundzyklus ohne Abschaltphasen verwendet werden, so wird eine Leistung von ca. 25% der Nennleistung erzielt. Wird nur der dritte Grundzyklus verwendet, so wird eine Leistung von ca. 44% der Nennleistung erzielt. Durch geeignete Kombination des ersten, des zweiten und des dritten Grundzyklus läßt sich der Leistungsbereich zwischen 25% der Nennleistung und 44% der Nennleistung nahezu stufenlos einstellen.

Die Aufgabe betreffend das elektrische Heizgerät ist erfindungsgemäß dadurch gelöst, daß in Serie zu jeder der zwei Unterlasten jeweils ein Leistungsschalter geschaltet ist, daß die zwei Unterlasten mit den jeweils seriell geschalteten Leistungsschaltern in Parallelschaltung angeordnet sind,
daß eine Steuereinheit zur Ansteuerung der Leistungsschalter vorgesehen ist und
daß die Steuereinheit die Leistungsschalter für einen unteren Leistungsbereich so steuert, daß wechselweise
- Abschaltphasen, in denen keine der Unterlasten auf Leistungsaufnahme geschaltet ist und
- Aufheizphasen, in denen mittels zeitlicher Kombination eines ersten und eines zweiten Grundzyklus von jeweils drei Wechselstrom-Halbwellen jeweils eine der Unterlasten auf Leistungsaufnahme geschaltet wird,
vorgesehen sind,
wobei während einer Halbwelle des ersten Grundzyklus die erste Unterlast auf Leistungsaufnahme geschaltet ist und während einer Halbwelle des zweiten Grundzyklus die zweite Unterlast auf Leistungsaufnahnie geschaltet ist und wobei während der anderen beiden Halbwellen des ersten und des zweiten Grundzyklus die Leistungsaufnahme abgeschaltet ist.

Als Leistungsschalter können beispielsweise Triacs verwendet werden. Zur Ansteuerung der zwei Unterlasten sind gemäß dieser Parallelschaltung nur zwei Leistungsschalter erforderlich, die von der Steuereinheit ansteuerbar sind. Daher ist diese Anordnung sehr einfach.

Einige Ausführungsbeispiele der Erfindung werden nachfolgend anhand der Zeichnung in den Fig. 1 bis 6 näher erläutert. Es zeigen:
Fig. 1 eine zur Durchführung des Verfahrens geeignete Anordnung mit einer Last, die zwei Unterlasten aufweist, wobei die zwei Unterlasten parallel geschaltet sind und mittels jeweils eines Leistungsschalters mit einer Wechselspannung beaufschlagbar sind,
Fig. 2 einen ersten Grundzyklus, bei dem zu jeder dritten Wechselstrom-Halbwelle die erste Unterlast mit Wechselspannung beaufschlagt wird,
Fig. 3 einen zweiten Grundzyklus, bei dem zu jeder dritten Wechselstrom-Halbwelle die zweite Unterlast mit Wechselstrom beaufschlagt wird,
Fig. 4 einen Schaltzyklus, bei dem in einer Aufheizphase der erste und der zweite Grundzyklus wechselweise wiederholt werden,
Fig. 5 einen Schaltzyklus, bei dem die Aufheizphasen erste Grundzyklusphasen aufweisen, in der der erste Grundzyklus seriell wiederholt wird, und zweite Grundzyklusphasen aufwiesen, in der der zweite Grundzyklus seriell wiederholt wird,
Fig. 6 einen Schaltzyklus, bei dem innerhalb einer Aufheizphase die erste und die zweite Grundzyklusphase jeweils unterschiedlich lang sind.

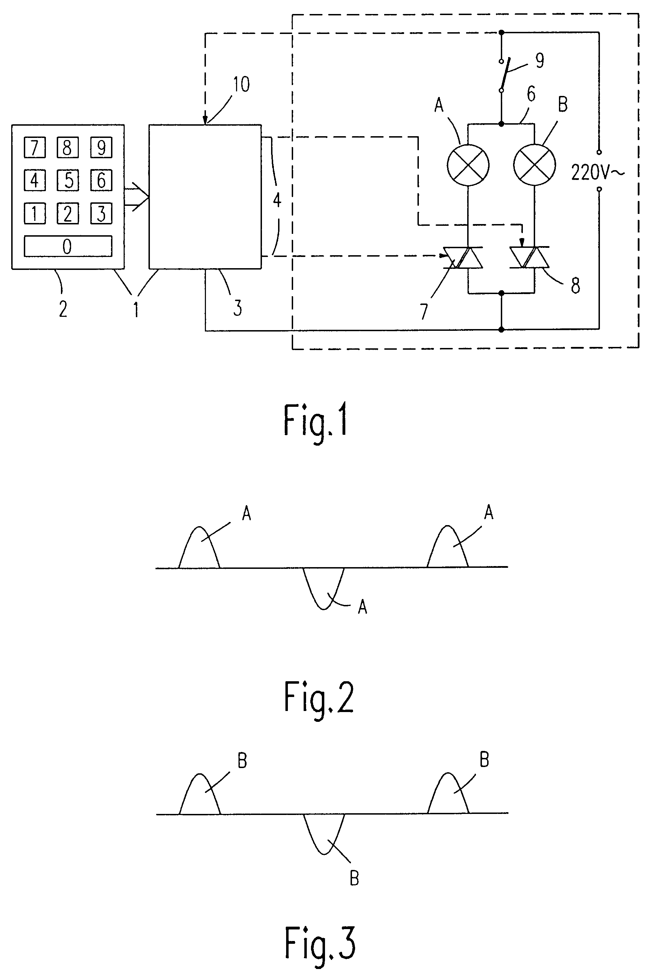

Eine in Fig. 1 dargestellte, zur Durchführung des Verfahrens zur schaltstoßarmen Leistungssteuerung elektrischer Lasten geeignete Anordnung weist eine Steuereinheit 1 auf, welche sich in eine Eingabetastatur 2 und eine elektronische Steuereinheit 3 aufteilt. Die elektronische Steuereinheit 3 kann beispielsweise mittels einer Mikroprozessoranordnung realisiert werden. Die Steuereinheit 3 ist zur schaltstoßarmen Leistungssteuerung einer elektrischen Heizlast 6 vorgesehen, welche eine erste Unterlast A und eine zweite Unterlast B aufweist. Die Unterlasten A und B sind in diesem Ausführungsbeispiel Halogenlampen, die in einem Licht-Kochgerät angeordnet sind. Der ersten Unterlast A ist als Leistungsschalter ein erster Triac 7 in Serie zugeschaltet. Der zweiten Unterlast B ist als Leistungsschalter ein zweiter Triac 8 in Serie zugeschaltet. Die Serienschaltung aus der ersten Unterlast A und dem ersten Triac 7 ist parallel zu der Serienschaltung aus der zweiten Unterlast B und dem zweiten Triac 8 geschaltet. Dieser Parallelschaltung ist über einen Sicherheitsschalter 9 die Netzspannung zugeschaltet. Der Steuereinheit 3 wird an einem an ihr vorgesehenen Eingang 10 die Netzspannung zugeführt, so daß die Steuereinheit 3 den Nulldurchgang der Wechselstrom-Halbwellen der Netzspannung identifizieren kann. Die elektronische Steuereinheit 3 ist mittels zweier Steuerleitungen 4 mit dem ersten Triac 7 bzw. dem zweiten Triac 8 gekoppelt. Über diese Steuerleitungen 4 können Steuersignale von der Steuereinheit 3 zu dem ersten Triac 7 bzw. dem zweiten Triac 8 übertragen werden. Durch geeignete Ansteuerung des ersten Triacs 7 bzw. des zweiten Triacs 8 können mittels der Steuereinheit 3 und der Steuerleitungen 4 die erste Unterlast A bzw. die zweite Unterlast B an die Netzspannung geschaltet werden.

Fig. 2 zeigt schematisch einen ersten Grundzyklus, in dem der erste Triac 7 zu jeder dritten Wechselstrom-Halbwelle durchgeschaltet wird, so daß die erste Unterlast A während jeder dritten Wechselstrom-Halbwelle mit der Netzspannung von 220V beaufschlagt wird.

Fig. 3 zeigt schematisch einen zweiten Grundzyklus, in dem der zweite Triac 8 zu jeder dritten Wechselstrom-Halbwelle durchgeschaltet wird, so daß die zweite Unterlast B während jeder dritten Wechselstrom-Halbwelle mit der Netzspannung von 220V beaufschlagt wird.

Zur Leistungssteuerung der Unterlasten A und B sind Aufheizphasen vorgesehen, in denen der erste und der zweite Grundzyklus in geeigneter Weise kombiniert werden, sowie Abschaltphasen, in denen weder die Unterlast A noch die Unterlast B auf Leistungsaufnahme geschaltet werden.

Als Grundzyklen werden also Muster verwendet, die zu jeder dritten Halbwelle eingeschaltet werden. Grundzyklen, die seltener als zu jeder dritten Halbwelle eingeschaltet werden, verursachen stärkeres Flickern und sind auch visuell unangenehm. Grundzyklen, die noch häufiger als zu jeder dritten Halbwelle eingeschaltet werden, verursachen im untersten Leistungsbereich in Kombination mit Abschaltphasen zu hohe Leistungssprünge und sind deshalb ebenfalls nicht besonders geeignet.

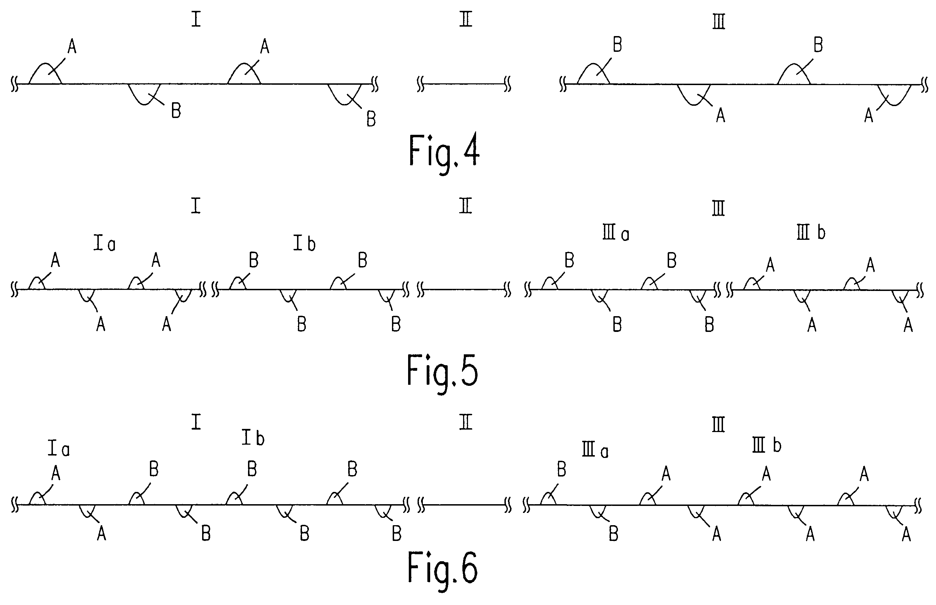

Fig. 4 zeigt schematisch ein erstes Ausführungsbeispiel eines Schaltmusters, welches aus einer Kombination des ersten und des zweiten Grundzyklus besteht. Bei dem Schaltmuster gemäß Fig. 4 werden in einer ersten Aufheizphase I der erste Grundzyklus und der zweite Grundzyklus jeweils alternierend nacheinander geschaltet, so daß zu jeder dritten Wechselstrom-Halbwelle abwechselnd die erste Unterlast A und die zweite Unterlast B auf Leistungsaufnahme geschaltet werden. Nach der Aufheizphase I folgt eine Abschaltphase II, in der keine der Unterlasten A bzw. B auf Leistungsaufnahme geschaltet werden und die entsprechend der gewünschten Leistung in der zeitlichen Länge variierbar ist. An die Abschaltphase II schließt sich eine Aufheizphase III an, in der erneut jeweils alternierend der zweite Grundzyklus B und der erste Grundzyklus A geschaltet werden, so daß jeweils abwechselnd zu jeder dritten Wechselstrom-Halbwelle die erste Unterlast B bzw. die zweite Unterlast A auf Leistungsaufnahme geschaltet werden. In der Aufheizphase I wird unmittelbar vor der Abschaltphase II die Unterlast B als letzte auf Leistungsaufnahme geschaltet. In der auf die Abschaltphase II folgenden Aufheizphase III wird diese Unterlast B, die in der Aufheizphase I als letzte auf Leistungsaufnahme geschaltet worden ist, als erste wieder eingeschaltet. Dieses Prinzip wird nachfolgend als Wechselprinzip bezeichnet. Mit diesem Wechselprinzip wird erreicht, daß nach einer Abschaltphase immer diejenige Unterlast als erste auf Leistungsaufnahme geschaltet wird, die vor der Abschaltphase zuletzt auf Leistungsaufnahme geschaltet war. Bei den als Unterlasten verwendeten Halogenlampen hat dies den Vorteil, daß nach einer Abschaltphase jeweils die wärmste Halogenlampe mit dem größten Widerstand zuerst eingeschaltet wird. Durch dieses Wechselprinzip kann die Flickernorm IEC-1000-3-3 auch noch bei sehr Kleinen Leistungen bis zu 5% der Nennleistung eingehalten werden.

Fig. 5 zeigt als zweites Ausführungsbeispiel ein Schaltmuster, bei dem die Aufheizphase I in eine Aufheizphase Ia und eine Aufheizphase Ib aufgeteilt ist. In der Aufneizphase Ia wird die erste Grundzyklusphase seriell wiederholt, d.h. zu jeder dritten Wechselstrom-Halbwelle wird die erste Unterlast A auf Leistungsaufnahme geschaltet. An die Aufheizphase Ia schließt sich die Aufheizphase Ib an, während der die zweite Grundzyklusphase seriell wiederholt wird, so daß zu jeder dritten Wechselstrom-Halbwelle die zweite Unterlast B auf Leistungsaufnahme geschaltet wird. Die Anzahl der Wiederholungen des ersten Grundzyklus in der Aufheizphase Ia bzw. des zweiten Grundzyklus in der Aufheizphase Ib kann je nach gewünschter Leistung verschieden gewählt werden. Um eine gleichmäßige Leistungsabgabe der ersten Unterlast A und der zweiten Unterlast B zu gewährleisten, sind in diesem Ausführungsbeispiel die Aufheizphasen Ia und Ib gleich lang gewählt. An die Aufheizphase I schließt sich eine Abschaltphase II an, die je nach gewünschter Leistung verschieden lang gewählt wird. An diese Abschaltphase II schließt sich eine Aufheizphase III an, die erneut in eine Aufheizphase IIIa und eine Aufheizphase IIIb aufgeteilt ist. An die Abschaltphase II schließt sich zunächst die Aufheizphase IIIa an, in der der zweite Grundzyklus seriell wiederholt wird, so daß zu jeder dritten Halbwelle die zweite Unterlast B auf Leistungsaufnahme geschaltet wird. An die Aufheizphase IIIa schließt sich die Aufheizphase IIIb an, in der der erste Grundzyklus seriell wiederholt wird, so daß die Unterlast A zu jeder dritten Wechselstrom-Halbwelle auf Leistungsaufnahme geschaltet wird. Es wird bemerkt, daß nach der Abschaltphase II zunächst mit der seriellen Wiederholung des zweiten Grundzyklus B begonnen wird, da die erste Aufheizphase I mit der seriellen Wiederholung des zweiten Grundzyklus beendet wurde. Somit wird nach der Abschaltphase II die wärmere Halogenlampe der Unterlast B, die vor der Abschaltphase II zuletzt aufgeheizt wurde, und demgemäß am Anfang der Aufheizphase III einen größeren Widerstand aufweist als die Halogenlampe der Unterlast A, zuerst eingeschaltet, wodurch sich, wie bereits angeführt, ein günstiges Flickerverhalten und eine geringe Netzrückwirkung bzw. Schaltstoßbelastung ergibt.

Fig. 6 zeigt als drittes Ausführungsbeispiel ein Schaltmuster, bei dem die Aufheizphasen I und II in jeweils unterschiedlich lange Aufheizphasen Ia und Ib bzw. IIIa und IIIb aufgeteilt sind. In der Aufheizphase Ia wird als erste Grundzyklusphase der erste Grundzyklus zweimal durchlaufen, so daß diese Aufheizphase Ia sechs Wechselstrom-Halbwellen lang ist und die erste Unterlast A zweimal auf Leistungsaufnahme geschaltet wird. An die Aufheizphase Ia schließt sich eine Aufheizphase Ib an, in der der zweite Grundzyklus mehrmals seriell wiederholt wird, so daß die zweite Unterlast B zu jeder dritten Wechselstrom-Halbwelle eingeschaltet wird. Die Anzahl der Wiederholungen des zweiten Grundzyklus innerhalb der Aufheizphase Ib kann je nach gewünschter Leistung variiert werden. An die Aufheizphase I schließt sich nachfolgend eine Abschaltphase II an, die ebenfalls je nach gewünschter Leistung in der zeitlichen Länge variierbar ist. An die Abschaltphase II schließt sich die Aufheizphase III an, welche zunächst mit einer Aufheizphase IIIa beginnt, in der der zweite Grundzyklus zweimal durchlaufen wird, so daß diese Aufheizphase IIIa sechs Wechselstrom-Halbwellen lang ist und die Unterlast B zweimal auf Leistungsaufnahme geschaltet wird. Es wird bemerkt, daß nach der Abschaltphase II mit der Unterlast B begonnen wird, da diese Unterlast B vor der Abschaltphase II zuletzt aufgeheizt wurde und somit die Halogenlampe der Unterlast B wärmer als die Halogenlampe der Unterlast A ist und dementsprechend einen größeren Widerstand aufweist. Somit tritt durch das Einschalten der größeren Unterlast B eine kleinere Schaltstoßbelastung bzw. Netzrückwirkung auf als dies beim Einschalten der kleineren Unterlast A der Fall wäre. An die Aufheizphase IIIa schließt sich die Aufheizphase IIIb an, in der der erste Grundzyklus mehrmals seriell wiederholt wird, so daß die dritte Unterlast A zu jeder dritten Wechselstrom-Halbwelle auf Leistungsaufnahme geschaltet wird. Die Anzahl der periodischen Wiederholungen des ersten Grundzyklus innerhalb der Aufheizphase IIIb kann je nach gewünschter Leistung variiert werden. Jedoch sollten die Aufheizphasen Ib und IIIb gleich lang sein, damit die Unterlast A und die Unterlast B im Mittel die gleiche Leistung abgeben.

Das Schaltmuster gemäß Fig. 6 ist insbesondere für einen Leistungsbereich zwischen 5% und 12% der Nennleistung geeignet. In diesem Leistungsbereich lassen sich mit dem Schaltmuster gemäß Fig. 6 sehr geringe Flickerwerte und sehr geringe Schaltstoßbelastungen unter Einhaltung der Norm IEC-1000-3-3 realisieren. Dies ist insbesondere bei Heizgeräten wichtig, da in diesem Leistungsbereich Warmhaltevorgänge stattfinden.

In einem Leistungsbereich zwischen 12% und 25% der Nennleistung sind die Schaltmuster gemäß den Fig. 4 und 5 bezüglich der Netzrückwirkungen etwas vorteilhafter als das Schaltmuster gemäß Fig. 6. In diesem Leistungsbereich ist das oben angeführte Wechselprinzip besonders vorteilhaft.

Mit dem beschriebenen Verfahren läßt sich in dem gesamten Leistungsbereich eine geräuschlose Leistungssteuerung durchführen, da keine mechanischen Schaltelemente erforderlich sind.

## Patentansprüche

1. Verfahren zur schaltstoßarmen Leistungssteuerung elektrischer Lasten, insbesondere temperaturabhängiger Lasten, welche in jeweils wenigstens zwei im wesentlichen gleiche Unterlasten elektrisch aufgeteilt sind, wobei die Unterlasten jeder Last zur Leistungsaufnahme an ein Wechselstromnetz schaltbar sind, dadurch gekennzeichnet, daß
zur Leistungssteuerung in einem unteren Leistungsbereich wechselweise
- Abschaltphasen, in denen für wenigstens drei Wechselstrom-Halbwellen keine der Unterlasten auf Leistungsaufnahme geschaltet ist und
- Aufheizphasen, in denen mittels zeitlicher Kombination wenigstens eines ersten und eines zweiten Grundzyklus von jeweils drei Wechselstrom-Halbwellen jeweils eine der Unterlasten auf Leistungsaufnahme geschaltet wird,
vorgesehen sind,
wobei während einer Halbwelle des ersten Grundzyklus die erste Unterlast auf Leistungsaufnahme geschaltet wird und während einer Halbwelle des zweiten Grundzyklus die zweite Unterlast auf Leistungsaufnahme geschaltet wird und wobei während der anderen beiden Halbwellen des ersten und des zweiten Grundzyklus die Leistungsaufnahme abgeschaltet wird.

2. Verfahren nach Anspruch 1, dadurch gekennzeichnet, daß die Aufheizphasen jeweils eine erste Grundzyklusphase, in der der erste Grundzyklus seriell wiederholt wird und eine zweite Grundzyklusphase aufweisen, in der der zweite Grundzyklus seriell wiederholt wird.

3. Verfahren nach Anspruch 2, dadurch gekennzeichnet, daß die erste und die zweite Grundzyklusphase innerhalb einer Aufheizphase jeweils unterschiedlich lang sind, daß in den zeitlich aufeinanderfolgenden Aufheizphasen wechselweise die kürzere Zyklusphase von der ersten Grundzyklusphase und die längere Zyklusphase von der zweiten Grundzyklusphase oder die kürzere Zyklusphase von der zweiten Grundzyklusphase und die längere Zyklusphase von der ersten Grundzyklusphase gebildet werden, wobei die kürzere Zyklusphase jeweils am Anfang der Aufheizphase vorgesehen ist.

4. Verfahren nach Anspruch 3, dadurch gekennzeichnet, daß die kürzere Zyklusphase jeweils 6 Wechselstrom-Halbwellen aufweist.

5. Verfahren nach Anspruch 1, dadurch gekennzeichnet, daß in den Aufheizphasen der erste und der zweite Grundzyklus wechselweise wiederholt werden.

6. Verfahren nach Anspruch 1, dadurch gekennzeichnet, daß nach einer Abschaltphase immer diejenige Unterlast zuerst auf Leistungsaufnahme geschaltet wird, die vor der Abschaltphase zuletzt auf Leistungsaufnahme geschaltet war.

7. Verfahren nach Anspruch 1, dadurch gekennzeichnet, daß in den Aufheizphasen eine zeitliche Kombination des ersten, des zweiten und eines dritten Grundzyklus vorgesehen ist, wobei während einer Halbwelle des dritten Grundzyklus die erste Unterlast auf Leistungsaufnahme geschaltet wird, während einer weiteren Halbwelle des dritten Grundzyklus die zweite Unterlast auf Leistungsaufnahme geschaltet wird und während der anderen Halbwelle des dritten Grundzyklus die Leistungsaufnahme abgeschaltet wird.

8. Elektrisches Heizgerät mit wenigstens einer elektrischen Heizlast, die zwei Unterlasten, insbesondere zwei Halogenlampen, aufweist, dadurch gekennzeichnet, daß in Serie zu jeder der zwei Unterlasten jeweils ein Leistungsschalter geschaltet ist, daß die zwei Unterlasten mit den jeweils seriell geschalteten Leistungsschaltern in Parallelschaltung angeordnet sind,
daß eine Steuereinheit zur Ansteuerung der Leistungsschalter vorgesehen ist und
daß die Steuereinheit die Leistungsschalter für einen unteren Leistungsbereich so steuert, daß wechselweise
- Abschaltphasen, in denen keine der Unterlasten auf Leistungsaufnahme geschaltet ist und
- Aufheizphasen, in denen mittels zeitlicher Kombination eines ersten und eines zweiten Grundzyklus von jeweils drei Wechselstrom-Halbwellen jeweils eine der Unterlasten auf Leistungsaufnahme geschaltet wird,
vorgesehen sind,
wobei während einer Halbwelle des ersten Grundzyklus die erste Unterlast auf Leistungsaufnahme geschaltet ist und während einer Halbwelle des zweiten Grundzyklus die zweite Unterlast auf Leistungsaufnahme geschaltet ist und wobei während der anderen beiden Halbwellen des ersten und des zweiten Grundzyklus die Leistungsaufnahme abgeschaltet ist.
